# EUROPÄISCHE PATENTSCHRIFT

(11) **EP 0 814 526 B1**
(45) Veröffentlichungstag und Bekanntmachung des Hinweises auf die Patenterteilung: **05.03.2003**
(21) Anmeldenummer: 96810840.7
(22) Anmeldetag: 02.12.1996
(51) Int. Cl.: H01M 8/06, H01M 8/24

(54) **Verfahren zum Betreiben einer Vorrichtung mit Brennstoffzellen**
Method for operating a device comprising fuel cells
Méthode pour opérer un dispositif comportant des piles à combustible

(30) Priorität: 19.06.1996 EP 96810410
(43) Veröffentlichungstag der Anmeldung: 29.12.1997
(73) Patentinhaber: Sulzer Hexis AG, 8400 Winterthur (CH)
(72) Erfinder: Diethelm, Roland, 8494 Bauma (CH)
(74) Vertreter: Sulzer Management AG

(56) Entgegenhaltungen:
- EP-A- 0 377 151
- EP-A- 0 654 838
- EP-A- 0 668 622
- EP-A- 0 780 917
- WO-A-94/18712
- DE-A- 4 217 892
- US-A- 3 146 131
- US-A- 3 718 506

## Beschreibung

Die Erfindung betrifft ein Verfahren zum Betreiben einer Vorrichtung mit Brennstoffzellen sowie eine Vorrichtung, mit der dieses Verfahren durchführbar ist.

Aus der WO 94/18712 ist ein Verfahren sowie eine entsprechende Vorrichtung mit Brennstoffzellen bekannt, mit der sich für Wohnhäuser und Industrie chemische Energie eines Brennstoffs in elektrische und thermische Energie umwandeln lässt. Es werden den Brennstoffzellen mittels Brennerabgasen eines separaten Brenners während einer Anfahrphase wie auch während des Normalbetriebs Wärme zugeführt, wobei die Wärmeübertragung direkt erfolgt.

In einer aus der EP-A- 0 654 838 bekannten Vorrichtung ist ein Prereformer integriert. Mit einem Hilfsbrenner wird während einer Anfahrphase einerseits der Prereformer aufgeheizt und andererseits eingespeiste Luft in einem Kanalsystem der Hülle vorgewärmt. Mit der vorgewärmten Luft wird dem Zellenblock Wärme zugeführt. Diese Wärmezufuhr reicht nicht aus, die Brennstoffzellen auf eine minimale Betriebstemperatur von 850°C zu erhitzen. Daher ist es nötig, Brenngas und Luft in die Vorrichtung einzuspeisen und in dem Nachverbrennungsraum zwischen Zellenblock und Hülle verbrennen zu lassen. Unmittelbar nach dem Beginn der Verbrennung, die gezündet werden muss, entstehen grosse Temperaturgradienten, durch die die Zellen beschädigt werden können.

Es ist Aufgabe der Erfindung, ein Verfahren für eine Vorrichtung mit Brennstoffzellen sowie eine'entsprechende Vorrichtung zu schaffen, bei dem bzw. der während der Anfahrphase die Zellen unbeschädigt bleiben. Diese Aufgabe wird mit in den unabhängigen Ansprüchen 1 und 9 definierten Verfahren bzw. Vorrichtung gelöst.

Die Vorrichtung umfasst einen Zellenblock mit Brennstoffzellen, eine wärmedämmende Hülle, einen Nachverbrennungsraum zwischen Hülle und Zellenblock, einen Prereformer für ein Brenngas sowie eine Hilfswärmequelle. Das Verfahren umfasst eine Anfahrphase und einen stromliefernden Betriebszustand. Heisse Verbrennungsgase, die in die Vorrichtung eingespeist oder dort in einem Hilfsbrenner erzeugt werden, bilden während der Anfahrphase die Hilfswärmequelle.

Die erfindungsgemässe Vorrichtung enthält einen ersten und einen zweiten Wärmetauscher für die Vorwärmung von Luft bzw. zum Vorwärmen des Prereformers. Der Prereformer ist ausserhalb des Zellenblocks angeordnet. Mit Vorteil ist der Prereformer im Zentrum des zweiten Wärmetauschers angeordnet, und der erste Wärmetauscher konzentrisch um den zweiten. Dabei stellt ein Ringspalt im zweiten Wärmetauscher eine Verbindung zwischen dem Nachverbrennungsraum und dem ersten Wärmetauscher her.

Erfindungsgemäss wird während der Anfahrphase in dem ersten Wärmetauscher Luft, die der Vorrichtung zugeführt wird, mittels eines aus dem heissen Verbrennungsgas und Abluft gebildeten und von der Luft getrennt geführten Gemisches vorgewärmt. Den Brennstoffzellen wird mit der vorgewärmten Luft Wärme zugeführt. Die aus den Zellen austretende Abluft wird dem heissen Verbrennungsgas zugemischt. In dem zweiten Wärmetauscher wird der Prereformer mit dem heissen Verbrennungsgas auf Betriebstemperatur aufgeheizt. Während des Betriebszustands wird das aus dem Nachverbrennungsraum austretende Abgas in dem zweiten Wärmetauscher als Wärmequelle für den Prereformer verwendet.

Die abhängigen Ansprüche 2 bis 8 betreffen vorteilhafte Ausführungsformen des erfindungsgemässen Verfahrens. Die abhängigen Ansprüche 10 bis 13 beziehen sich auf Ausführungsbeispiele der erfindungsgemässen Vorrichtung.

Nachfolgend wird die Erfindung anhand der Zeichnungen erläutert. Es zeigen:
- Fig. 1: einen vertikalen Längsschnitt durch die erfindungsgemässe Vorrichtung,
- Fig. 2: einen vergrösserten Ausschnitt derselben Vorrichtung,
- Fig. 3: ein Diagramm zur Erläuterung des erfindungsgemässen Verfahrens,
- Fig. 4: eine schematische Darstellung einer Anlage, in der ein Heizsystem mit der erfindungsgemässen Vorrichtung eine Kombination bildet,
- Fig. 5: ein Detail zu einem zweiten Ausführungsbeispiel der erfindungsgemässen Vorrichtung und
- Fig. 6: einen Ausschnitt wie in Fig.2 für ein drittes Ausführungsbeispiel.

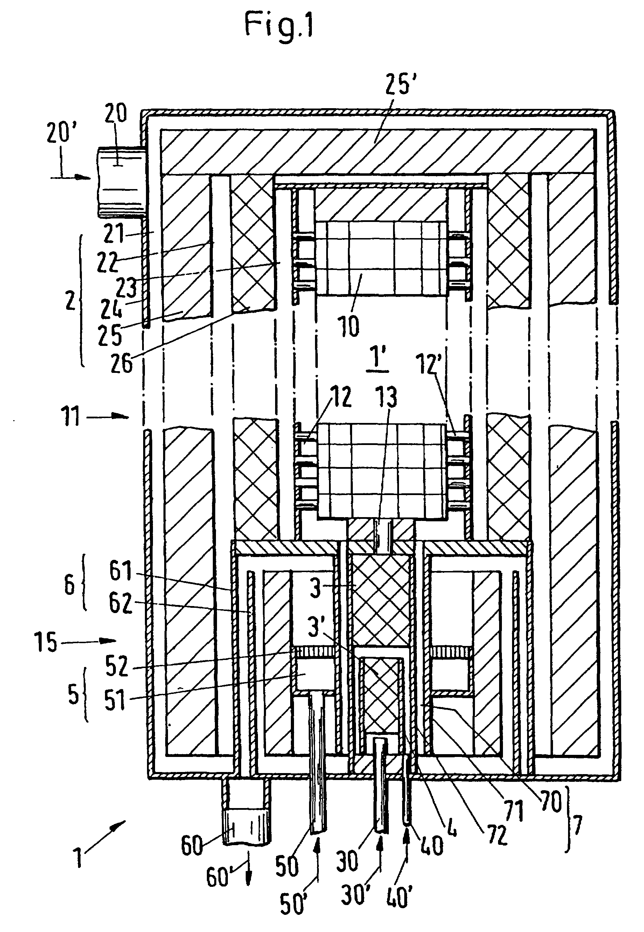

Die Vorrichtung 1 in Fig.1 umfasst in einem oberen Teil 11 einen Zellenblock 1' mit Brennstoffzellen 10, einen Teil einer wärmedämmenden Hülle 2, einen Nachverbrennungsraum 12 und eine Zuführstelle 20 für Luft 20'. Die Luft 20' gelangt über ein Kanalsystem 21, 22 und eine luftdurchlässige Wand 26 in einen ringspaltförmigen Raum 23, von wo sie über Röhrchen 12' in die einzelnen Zellen eingespeist wird. Über ein zentrales Rohr 13 kann Brenngas aus einem unteren Teil 15 der Vorrichtung 1 in den Zellenblock 1' zugeführt werden. Die Hülle 2 mit einer Aussenhaut 24 und wärmedämmenden Wänden 25, 25' und 26 ist so ausgebildet, dass sie als Vorerwärmer für die zugeführte Luft 20' wirkt.

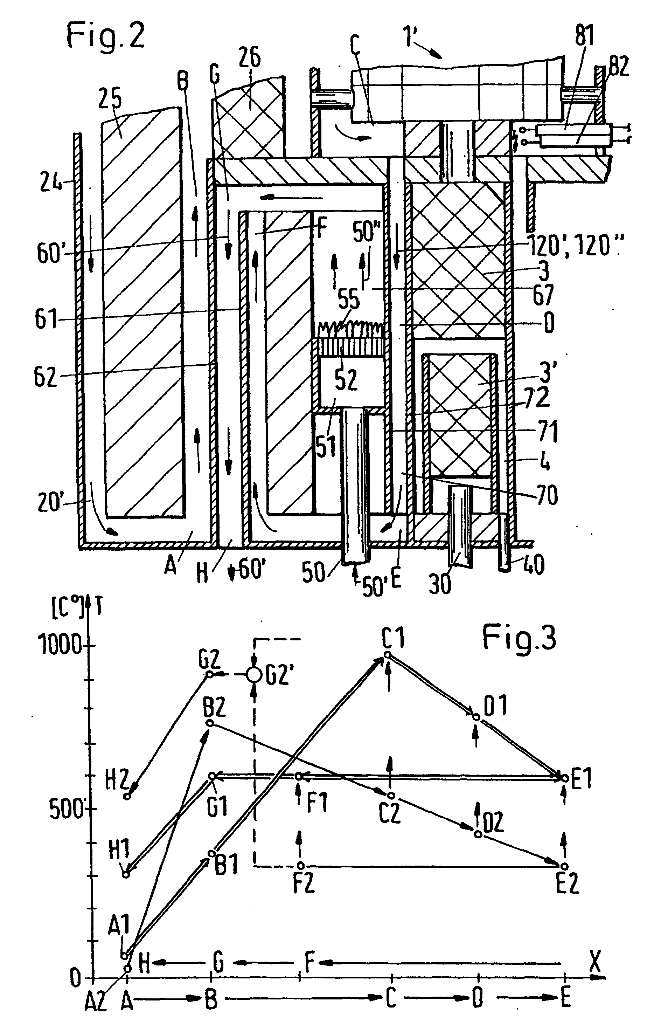

Der untere Teil 15 der Vorrichtung 1 - siehe auch Fig.2 - umfasst neben einem Teil der Hülle 2 einen Prereformer 3, einen Schwefelabsorber 3', einen Hilfsbrenner 5, einen ersten Wärmetauscher 6 und einen zweiten Wärmetauscher 7. Der Prereformer 3 und der Schwefelabsorber 3' haben jeweils eine zylindrische Form. Ein ringspaltförmiger Mantelraum 4 um den Absorber 3' ist als Verdampfer für Wasser 40' (Einspeiseleitung 40) ausgebildet. Der Hilfsbrenner 5 ist in einem Ringraum 67 angeordnet. Er ist als torusförmige Kammer 51 ausgebildet, die gegen oben von einer porösen Platte 52 abgeschlossen ist. Auf dieser Platte 52 mit gleichmässig verteilten Durchlassöffnungen wird ein Gas/Luft-Gemisch 50' (Zuführleitung 50) zur Verbrennung gebracht, wobei sich eine flächenartig ausgebreitete Flamme 55 - siehe Fig.2 - ausbildet.

Das für die stromliefernde Reaktion benötigte Brenngas 30' - es handelt sich in der Regel um Erdgas - wird über die Leitung 30 in den Absorber 3' eingeleitet, der für die Entfernung von schwefelhaltigen Verunreinigungen des Gases 50' vorgesehen ist. Anschliessend wird Methan, das in dem Gas 50' enthalten ist, im Prereformer 3 zusammen mit Wasser in Wasserstoff und Kohlenmonoxid umgesetzt. Die für diese Reaktion benötigte Energie wird während des stromliefernden Betriebszustandes von heissem Abgas 120" (siehe Fig.2) geliefert, das aus dem Nachverbrennungsraum 12 kommend durch den zweiten Wärmetauscher 7 strömt.

Während der Anfahrphase wird die Energie zum Aufheizen des Prereformers 3 von dem Hilfsbrenner 5 geliefert. Das Verbrennungsgas 50" des Hilfsbrenners 5 heizt die Wand 72 des zweiten Wärmetauschers 7 auf. Der Wärmetransport von der Wand 72 zu der inneren Wand 71, die in wärmeleitendem Kontakt mit dem Prereformer 3 steht, erfolgt hauptsächlich durch Strahlung. Der Temperaturunterschied zwischen den beiden Wänden 71 und 72 beträgt dabei rund 100°C.

Das Verbrennungsgas 50" des Hilfsbrenners 5 strömt radial nach aussen und vermischt sich zwischen den Punkten F und G (siehe Fig.2) mit Abluft 120' aus dem Zellenblock 1'. Das Gasgemisch 60' strömt zwischen den zylindrischen Wänden 61 und 62 des ersten Wärmetauschers 6 zu einer Austrittsstelle 60, wo das teilweise abgekühlte Gasgemisch 60' die Vorrichtung 1 verlässt. Die in die Vorrichtung 1 zugeführte Luft strömt entlang der Wand 62 im Gegenstrom zu dem Gasgemisch 60' und wird dabei von einer Temperatur, die nur wenig über der Umgebungstemperatur liegt (d.h. rund 20 bis 30°C), auf eine Temperatur zwischen 700 bis 800°C aufgeheizt. Mit der vorgewärmten Luft 20' wird Wärme den Brennstoffzellen 10 zugeführt. Die aus den Zellen 10 austretende Abluft 120' strömt durch den zweiten Wärmetauscher 7 und wird anschliessend - wie bereits erwähnt - den Verbrennungsgasen 50" des Hilfsbrenners 5 zugemischt.

Nach dem Aufheizen des Prereformers und der Zellen auf Temperaturen, bei denen ein stromliefernder Betrieb einsetzen kann, werden die Mengen an zugeführter Luft 20' und Brenngas 30' auf Werte gebracht, die einem stationären Betriebszustand entsprechen; die Zufuhr des Gas/Luft-Gemisches 50' in den Hilfsbrenner 5 wird eingestellt. Dies geschieht, wenn die Zellen eine Temperatur von rund 800°C erreicht haben, d.h. wenn die Temperatur in dem Nachverbrennungsraum 12 einen Wert übersteigt, bei dem die Verbrennung des aus den Zellen austretenden Gases - bei gleichzeitigem Austritt von Luft - selbstgezündet einsetzt.

In Fig.2 sind Punkte A, B, ... H in dem Kanalsystem der Hülle 2 angegeben. Zwischen den Punkten A und B bzw. G und H erfolgt der indirekte Wärmetausch von dem heissen Gasgemisch 60' zu der zugeführten Luft 20'. Zwischen C und D gibt die Abluft 120' bzw. das heisse Abgas 120" Wärme an den Prereformer 3 ab; zwischen D und E an den Wasserverdampfer 4 sowie den Schwefelabsorber 3'. Zwischen F und G wird während der Anfahrphase die Abluft 120' mit dem heissen Verbrennungsgas 50" vermischt.

Das Diagramm der Fig.3 zeigt vereinfacht den Verlauf der Temperaturen im Kanalsystem der Hülle 2, wobei die Diagrammpunkte A1, B1, ... die Temperaturen für den stationären Betriebszustand an den genannten Punkten A, B, ... darstellen, und entsprechend die Diagrammpunkte A2, B2, .... die während der Anfahrphase durchlaufenen Temperaturen darstellen. Die Punkte A, B, ... sind auf der x-Achse aufgetragen, wobei allerdings die Abstände zwischen diesen Punkten nicht den tatsächlichen Abständen in der Vorrichtung 1 entsprechen. Die im Diagramm gezeigten, nach oben gerichteten Pfeile geben an, dass sich die Punkte C2, ... F2 im Laufe der Anfahrphase nach oben verschieben, so dass sie nach Abschluss der Anfahrphase auf die Punkte C1, ... F1 zu liegen kommen. Der Punkt G2' entspricht der Mischtemperatur, die beim Vermischen des heissen Verbrennungsgases 50" mit der Abluft 120' resultiert. Die auf der T-Achse für die Diagrammpunkte A1, B1, ... A2, B2, ... ablesbaren Werte (0 - 1000°C) entsprechen im wesentlichen den tatsächlichen Temperaturen. Der Einfachheit halber sind im Diagramm die Punkte C2 und D2 auf der linearen Verbindung zwischen den Punkten B2 und E2 aufgetragen. Das gleiche gilt für den Punkt D1 auf der Verbindung zwischen C1 und E1.

Während der Anfahrphase wird mit Vorteil eine geringe Gaszufuhr in den Zellenblock 1' vorgesehen, damit in den Brennstoffzellen 10 die Gasräume gespült werden und in diese keine Luft eintreten kann. Das Spülgas vermischt sich im Nachverbrennungsraum 12 mit der Abluft, ohne dass es dort vor Erreichen der Zündtemperatur zu einer Verbrennung kommt. Eine Verbrennung kann mittels Zündelektroden 81 und 82 unterhalb dem Zellenblock 1' gezündet werden, so dass das Spülgas im Ringspaltraum 70 verbrannt wird und die entstehende Wärme durch den Prereformer 3 sowie den Absorber 3' aufgenommen werden kann.

Die weitere Entwicklung der Materialien für die Brennstoffzellen wird voraussichtlich dazu führen, dass künftig der Betrieb bereits bei Temperaturen zwischen 600 und 700°C statt zwischen 850 und 900°C durchführbar ist. Die hier offenbarte Lehre kann selbstverständlich auch in entsprechenden Vorrichtungen mit tieferer Betriebstemperatur angewendet werden.

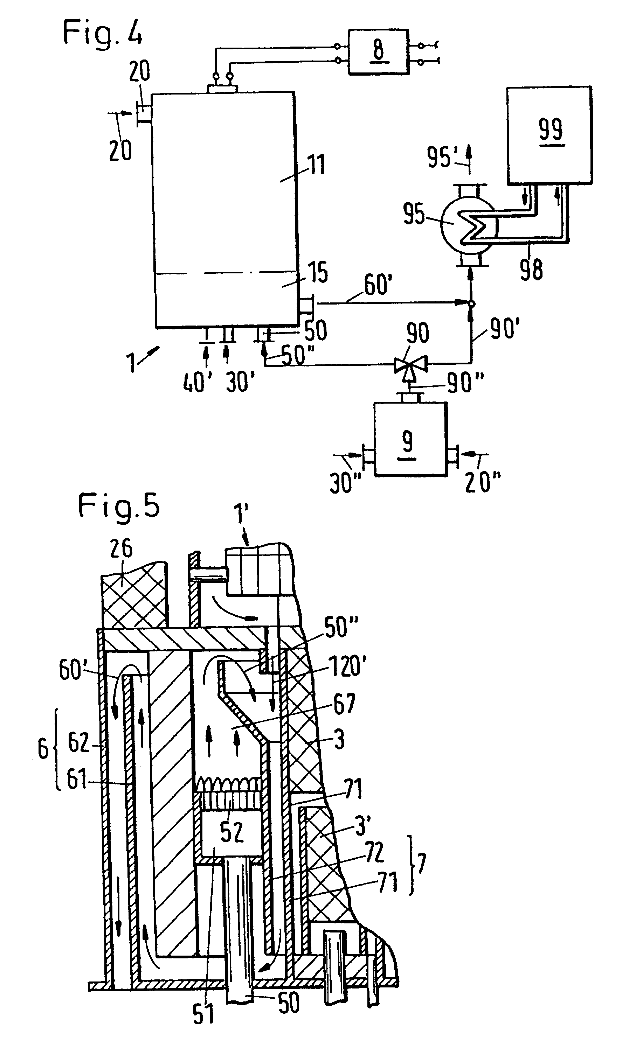

Es braucht die für die Anfahrphase benötigte Hilfswärmequelle nicht mit dem Hilfsbrenner 5 hergestellt werden. Es ist auch möglich, die Hilfswärmequelle mit heissen Verbrennungsgasen aus einem externen Brenner 9 - siehe Fig.4 - zu bilden.

Die in Fig.4 schematisch dargestellte Anlage zeigt neben der erfindungsgemässen Vorrichtung 1 und dem Brenner 9 einen Wärmetauscher 95 sowie einen Wärmeabnehmer 99, beispielsweise eine Raumheizung. Im Brenner 9 wird Gas 30" mit Luft 20" zu dem Verbrennungsgas 90" verbrannt. Mit dem Organ 90 kann wahlweise das Verbrennungsgas 90" dem Wärmetauscher 95 (Gasstrom 90') oder der Vorrichtung 1 (Gasstrom 50") durch den Anschlussstutzen 50 zugeführt werden. Das heisse Verbrennungsgas 50" kann ähnlich wie das Gas/Luft-Gemisch 50' über einen torusförmigen Verteilerkörper (entsprechend dem Hilfsbrenner 5 in Fig.1) in den unteren Teil 15 der Vorrichtung 1 eingespeist werden.

Der Wärmetauscher 95 kann zusätzlich auch dafür verwendet werden, die mit dem heissen Abgas 60' aus der Vorrichtung 1 freigesetzten Abwärme zu nutzen. Die im Wärmetauscher 95 gewonnene Wärme wird über die Leitung 98 dem Abnehmer 99 zugeführt. Der Gasstrom 95' mit den abgekühlten Gasen wird in einen nicht dargestellten Kamin eingeleitet.

In Fig.4 ist zusätzlich dargestellt, dass der im oberen Teil 11 der Vorrichtung 1 aus dem Gas 30', dem Wasser 40' und der Luft 20' erzeugte elektrische Gleichstrom in einem Konverter 8 in einen Wechselstrom umgewandelt wird.

Fig.5 zeigt ein Detail zu einem Ausführungsbeispiel, bei dem die Führung des heissen Verbrennungsgases 50" und entsprechend der zweite Wärmetauscher 7 modifiziert sind. Das Gas 50" strömt statt radial nach aussen zunächst gegen das Zentrum und in den Wärmetauscher 7, wo es mit der Abluft 120' vermischt wird. Bei dieser Ausführungsform erfolgt die Wärmeübertragung aus dem heissen Gas 50" in den Prereformer 3 über nur eine Wand, nämlich die Wand 71.

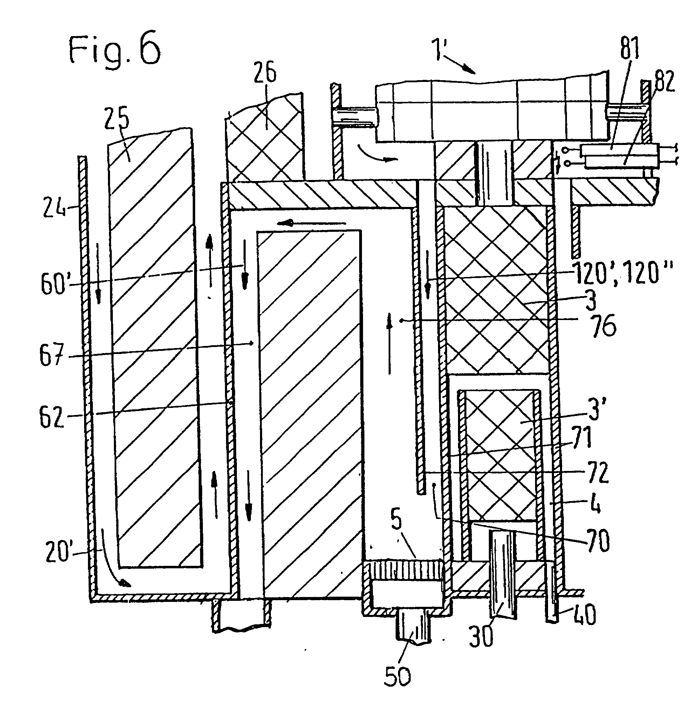

Bei dem dritten Ausführungsbeispiel der Fig.6 folgt anschliessend an den Nachverbrennungsraum 12 ein drei konzentrische Ringspalträume 70, 76 und 67 umfassendes Kanalsystem. Der Hilfsbrenner 5 ist beim Übergang vom inneren Ringspaltraum 70 zum mittleren Ringspaltraum 76 angeordnet und er grenzt an die äussere Oberfläche der Vorrichtung 1 an. Der äussere Ringspaltraum 67 gehört zum ersten Wärmetauscher 6, während die beiden anderen Teile des zweiten Wärmetauscher 7 bilden. Gegenüber den zwei ersten Ausführungsbeispielen stellt das dritte eine einfachere Konstruktion dar, da der erste Wärmetauscher 6 auf der Abgasseite nur noch einen Ringspaltraum 67 umfasst und damit die Wand 61 wegfällt. Die Anordnung des Hilfsbrenners 5 an der äusseren Oberfläche der Vorrichtung 1 ist besonders vorteilhaft, da das über die Leitung 50 zugeführte Gasgemisch durch das heisse Abgas 120', 120" weniger stark erhitzt wird und somit die Gefahr einer Selbstentzündung im Raum 51 weniger gross ist.

## Patentansprüche

1. Verfahren zum Betreiben einer Vorrichtung (1) mit Brennstoffzellen (10), die einen Zellenblock (1'), eine wärmedämmende Hülle (2), einen Nachverbrennungsraum (12) zwischen Hülle und Zellenblock, einen Prereformer (3) für ein Brenngas (30'), eine Hilfswärmequelle sowie einen ersten und einen zweiten Wärmetauscher (6, 7) zum Vorwärmen von der Vorrichtung zugeführten Luft (20') beziehungsweise zum Vorwärmen des Prereformers umfasst, wobei das Verfahren eine Anfahrphase und einen stromliefernden Betriebszustand umfasst, heisse Verbrennungsgase (50''), die in die Vorrichtung eingespeist oder dort in einem Hilfsbrenner (5) erzeugt werden, die Hilfswärmequelle bilden, während der Anfahrphase in dem ersten Wärmetauscher (6) die Luft (20'), mittels eines aus dem heissen Verbrennungsgas (50'') und Abluft (120') gebildeten und von der Luft getrennt geführten Gemisches (60') vorgewärmt wird, den Brennstoffzellen mit der vorgewärmten Luft Wärme zugeführt wird, die aus den Zellen austretende Abluft dem heissen Verbrennungsgas zugemischt wird, in dem zweiten Wärmetauscher (7) der Prereformer mit dem heissen Verbrennungsgas (50") auf Betriebstemperatur aufgeheizt wird und während des Betriebszustands das aus dem Nachverbrennungsraum austretende Abgas (120'') in dem zweiten Wärmetauscher als Wärmequelle für den Prereformer verwendet wird, wobei der Prereformer im Zentrum des zweiten Wärmetauschers angeordnet ist, der erste Wärmetauscher konzentrisch um den zweiten angeordnet ist und ein im zweiten Wärmetauscher angeordneter Ringspalt eine Verbindung zwischen dem Nachverbrennungsraum und dem ersten Wärmetauscher herstellt.

2. Verfahren nach Anspruch 1, **dadurch gekennzeichnet, dass** während der Anfahrphase die im zweiten Wärmetauscher (7) stattfindende Wärmeübertragung von dem heissen Verbrennungsgas (50'') zu dem Prereformer (3) über einen Ringspalt (70) erfolgt, durch den die aus dem Zellenblock (1') und durch den Nachverbrennungsraum (12) strömende Abluft (120') in den ersten Wärmetauscher (6) geleitet wird.

3. Verfahren nach Anspruch 1 oder 2, **dadurch gekennzeichnet, dass** nach Aufheizen des Prereformers (3) und der Zellen (10) auf Temperaturen, bei denen ein stromliefernder Betrieb einsetzen kann, die Mengen an zugeführter Luft (20') und Gas (30') auf Werte gebracht werden, die einem stationären Betriebszustand entsprechen, und dass die Wärmezufuhr der Hilfswärmequelle (50") eingestellt wird.

4. Verfahren nach einem der Ansprüche 1 bis 3, **dadurch gekennzeichnet, dass** die Wärmezufuhr der Hilfswärmequelle (50'') eingestellt wird, wenn die Zellen (10) eine Temperatur von rund 800°C erreicht haben.

5. Verfahren nach einem der Ansprüche 1 bis 4, **dadurch gekennzeichnet, dass** die Mengen an zugeführter Luft (20') und Gas (30') auf Werte gebracht werden, die einem stationären Betriebszustand entsprechen, und dies zu einem Zeitpunkt, da die Temperatur in dem Nachverbrennungsraum einen Wert übersteigt, bei dem die Verbrennung des Luft/Gas-Gemisches durch Selbstzündung einsetzt.

6. Verfahren nach einem der Ansprüche 1 bis 5, **dadurch gekennzeichnet, dass** zu Beginn des Anfahrbetriebs die zugeführte Luft (20') im ersten Wärmetauscher (6) von rund 20 bis 30°C auf rund 700 bis 800°C vorgewärmt wird, wobei der indirekte Wärmetausch mit dem Gemisch aus heissem Verbrennungsgas (50") und Abluft (120') im Gegenstrom durchgeführt wird.

7. Verfahren nach einem der Ansprüche 1 bis 6, **dadurch gekennzeichnet, dass** der Prereformer (3) ausserhalb des Zellenblocks (1') und im Zentrum des zweiten Wärmetauschers (7) angeordnet ist, und dass während des stromliefernden Betriebszustandes die aus dem Nachverbrennungsraum (12) in den zweiten Wärmetauscher strömenden Abgase (120") dem Prereformer (3) durch einen radialen, nach innen gerichteten Fluss Wärme zuführen.

8. Verfahren nach Anspruch 7, **dadurch gekennzeichnet, dass** der erste Wärmetauscher (6) konzentrisch um den zweiten (7) angeordnet ist und dass das heisse Verbrennungsgas (50") in einem Ringraum (67) zwischen den beiden Wärmetauscher gebildet oder eingespeist wird.

9. Vorrichtung (1) mit Brennstoffzellen (10) zum Durchführen des Verfahrens gemäss einem der Ansprüche 1 bis 8, welche Vorrichtung einen Zellenblock (1'), eine wärmedämmende Hülle (2), einen Nachverbrennungsraum (12) zwischen Hülle und Zellenblock, einen Prereformer (3) für Brenngas (30'), einen internen oder externen Hilfsbrenner (5, 9) zur Erzeugung einer Hilfswärmequelle für die Anfahrphase sowie einen ersten und einen zweiten Wärmetauscher (6, 7) für die Vorwärmung von Luft (20') beziehungsweise zum Vorwärmen des Prereformers umfasst,
**dadurch gekennzeichnet, dass** der Prereformer ausserhalb des Zellenblocks und im Zentrum des zweiten Wärmetauschers (7) angeordnet ist, dass der erste Wärmetauscher (6) konzentrisch um den zweiten angeordnet ist und dass ein im zweiten Wärmetauscher angeordneter Ringspalt (70) eine Verbindung zwischen dem Nachverbrennungsraum und dem ersten Wärmetauscher herstellt.

10. Vorrichtung nach Anspruch 9, **dadurch gekennzeichnet, dass** ein interner Hilfsbrenner (5) vorgesehen ist, der eine ringförmige Verbrennungsfläche (52) umfasst und zwischen dem ersten und dem zweiten Wärmetauscher (6, 7) angeordnet ist.

11. Vorrichtung nach Anspruch 9, **dadurch gekennzeichnet, dass** zwischen dem ersten und dem zweiten Wärmetauscher (6, 7) eine ringförmige Kammer (51, 67) angeordnet ist, in die heisse Verbrennungsgase (50") einspeisbar sind, die mit einem externen Hilfsbrenner (9) erzeugt sind.

12. Vorrichtung nach einem der Ansprüche 9 bis 11, **dadurch gekennzeichnet, dass** der Zellenblock (1') aus einem zylindrischen Stapel von Brennstoffzellen (10) aufgebaut ist und dass der Nachverbrennungsraum (12) den Stapel in Form eines Ringspalts umgibt.

13. Vorrichtung nach den Ansprüchen 10 und 12, **dadurch gekennzeichnet, dass** anschliessend an den Nachverbrennungsraum (12) ein drei konzentrische Ringspalträume (70, 76, 67) umfassendes Kanalsystem folgt, dass der Hilfsbrenner (5) beim Übergang vom inneren Ringspaltraum (70) zum mittleren Ringspaltraum (76) angeordnet ist und dass der Hilfsbrenner an die äussere Oberfläche der Vorrichtung (1) angrenzt.

## Claims

1. Method for operating an apparatus (1) with fuel cells (10) which comprises a cell block (1'), a heat insulating jacket (2), an after-burner chamber (12) between the jacket and the cell block, a prereformer (3) for a fuel gas (30'), an auxiliary heat source, as well as first and second heat exchangers (6, 7) for the preheating of the air (20') fed to the apparatus and for the preheating of the prereformer respectively, wherein the method comprises a start-up phase and a current-delivering operating state, wherein hot combustion gases (50") which are fed into the apparatus or are produced there in an auxiliary burner (5) form the auxiliary heat source, wherein the air (20') is preheated during the start-up phase in the first heat exchanger (6) by means of a mixture (60') formed from the hot combustion gas (50") and exhaust air (120'), with the mixture being conducted separately from the air, wherein heat is supplied to the fuel cells with the preheated air wherein the exhaust air emerging from the cells is admixed to the hot combustion gas, wherein the prereformer is heated to operating temperature with the hot combustion gas (50") in the second heat exchanger (7); and wherein during the operating state the exhaust gas (120") leaving the afterburner chamber is used in the second heat exchanger as a source of heat for the prereformer, with the prereformer being arranged at the centre of the second heat exchanger, with the first heat exchanger being concentrically arranged about the second heat exchanger and with a ring gap provided in the second heat exchanger producing a connection between the afterburner chamber and the first heat exchanger.

2. Method in accordance with claim 1 **characterised in that** during the start-up phase the heat transfer from the hot combustion gas (50") to the prereformer (3) taking place in the second heat exchanger (7) takes place via a ring gap (70) through which the exhaust air (120') flowing out of the cell block (1') and through the afterburner chamber (12) is conducted into the first heat exchanger (6).

3. Method in accordance with claim 1 or claim 2 **characterised in that** after the prereformer (3) and the cells (10) have been heated to temperatures at which a current delivering operation can set in, the amounts of infed air (20') and gas (30') are brought to values which correspond to a stationary operating state; and **in that** the heat supply of the auxiliary heat source (50") is discontinued.

4. Method in accordance with one of the claims 1 to 3 **characterised in that** the heat supply of the auxiliary heat source (50") is discontinued when the cells (10) have attained a temperature of about 800°C.

5. Method in accordance with one of the claims 1 to 4 **characterised in that** the amounts of infed air (20') and gas (30') are brought to values which correspond to a stationary operating state, and this at a time when the temperature in the afterburner chamber exceeds a value at which the spontaneous combustion of the air / gas mixture sets in.

6. Method in accordance with one of the claims 1 to 5 **characterised in that** at the beginning of the start-up operation the infed air (20') is preheated from about 20 to 30°C to about 700 to 800°C in the first heat exchanger (6), with the indirect heat exchange between the mixture of hot combustion gas (50") and exhaust air (120') being performed in counterflow.

7. Method in accordance with one of the claims 1 to 6 **characterised in that** the prereformer (3) is arranged outside the cell block (1') and in the centre of the second heat exchanger (7); and **in that** during the current-delivering operating state the exhaust gases (120") flowing out of the afterburner chamber (12) into the second heat exchanger supply the prereformer (3) with heat through a flow directed radially inwards.

8. Method in accordance with claim 7 **characterised in that** the first heat exchanger (6) is arranged concentrically about the second (7); and **in that** the hot combustion gas (50") is formed in or fed into a ring space (67) between the two heat exchangers.

9. Apparatus (1) with fuel cells (10) for carrying out the method in accordance with one of the claims 1 to 8, which apparatus comprises a cell block (1'), a heat insulating jacket (2), an afterburner chamber (12) between the jacket and the cell block, a prereformer (3) for combustion gas (30'), an internal or external auxiliary burner (5, 9) for producing an auxiliary heat source for the start-up phase and a first and a second heat exchanger (6, 7) for the preheating of air (20') and for preheating the prereformer respectively,
**characterised in that** the prereformer is arranged outside the cell block and at the centre of the second heat exchanger (7); **in that** the first heat exchanger (6) is arranged concentrically about the second; and **in that** a ring gap (70) arranged in the second heat exchanger produces a connection between the afterburner chamber and the first heat exchanger.

10. Apparatus in accordance with claim 9 **characterised in that** an internal auxiliary burner (5) is provided which comprises a ring-shaped combustion surface (52) and is arranged between the first and second heat exchangers (6, 7).

11. Apparatus in accordance with claim 9 **characterised in that** a ring-shaped chamber (51, 67) is arranged between the first and the second heat exchangers (6, 7) into which hot combustion gases (50") can be fed which are produced with the external auxiliary burner (9).

12. Apparatus in accordance with one of the claims 9 to 11 **characterised in that** the cell block (1') is built up of a cylindrical stack of fuel cells (10); and **in that** the afterburner chamber (12) surrounds the stack in the form of a ring gap.

13. Apparatus in accordance with claims 10 and 11 **characterised in that** a channel system comprising three concentric ring gap spaces (70, 76, 67) adjoins and follows the afterburner chamber (12); **in that** the auxiliary burner (5) is arranged at the transition from the inner ring gap space (70) to the middle ring gap space (76); and **in that** the auxiliary burner borders on the outer surface of the apparatus (1).

## Revendications

1. Procédé pour faire fonctionner un dispositif (1) avec des piles à combustible (10), qui comprend un bloc de piles (1'), une enveloppe calorifuge (2) , une enceinte de post-combustion (12) entre l'enveloppe et le bloc de piles, un pré-reformeur (3) pour un gaz de combustion (30'), une source de chaleur auxiliaire ainsi qu'un premier et un deuxième échangeur de chaleur (6, 7) pour le préchauffage de l'air (20') amené au dispositif respectivement pour le préchauffage du pré-reformeur, où le procédé comprend une phase de démarrage et un état de fonctionnement fournisseur de courant, où des gaz de combustion chauds (50") qui sont introduits dans le dispositif ou y sont produits dans un brûleur auxiliaire (5), constituent la source de chaleur auxiliaire, pendant la phase de démarrage, dans le premier échangeur de chaleur (6), l'air (20') est préchauffé au moyen d'un mélange (60') formé par le gaz de combustion chaud (50") et l'air d'échappement (12)') et guidé séparément de l'air, où est amenée aux piles à combustible avec l'air préchauffé de la chaleur, l'air échappement sortant des piles est ajouté aux gaz de combustion chauds, dans le deuxième échangeur de chaleur (7) le pré-reformeur est chauffé avec le gaz de combustion chaud (50") à la température de fonctionnement et, pendant l'état de fonctionnement, le gaz d'échappement (120') sortant de l'enceinte de post-combustion est utilisé dans le deuxième échangeur de chaleur comme source de chaleur pour le pré-reformeur, où le pré-reformeur est disposé au centre du deuxième échangeur de chaleur, le premier échangeur de chaleur est disposé d'une manière concentrique autour du deuxième, et une fente annulaire disposée dans le deuxième échangeur de chaleur établit une liaison entre l'enceinte de post-combustion et le premier échangeur de chaleur.

2. Procédé selon la revendication 1, **caractérisé en ce que** pendant la phase de démarrage, la transmission de chaleur ayant lieu dans le deuxième échangeur de chaleur (7) a lieu du gaz de combustion chaud (50") au pré-reformeur (3) par une fente annulaire (70) à travers laquelle l'air d'échappement (120') s'écoulant du bloc de piles (1') et à travers l'enceinte de post-combustion (12) est guidé dans le premier échangeur de chaleur (6).

3. Procédé selon la revendication 1 ou 2, **caractérisé en ce que**, après l'échauffement du pré-reformeur (3) et des piles (10) à des températures, où un fonctionnement fournisseur de courant peut commencer, les quantités d'air amenées (20') et de gaz (30') sont amenées à des valeurs qui correspondent à un état de fonctionnement stationnaire, et **en ce que** l'amenée de chaleur de la source de chaleur auxiliaire (50") est réglée.

4. Procédé selon l'une des revendications 1 à 3, **caractérisé en ce que** l'amenée de chaleur de la source de chaleur auxiliaire (50') est réglée lorsque les piles (10) ont atteint une température d'environ 800°C.

5. Procédé selon l'une des revendications 1 à 4, **caractérisé en ce que** les quantités d'air amenées (20') et de gaz (30') sont amenées à des valeurs qui correspondent à un état de fonctionnement stationnaire, et cela à un moment où la température dans l'enceinte de post-combustion dépasse une valeur à laquelle commence la combustion du mélange air/gaz par auto-allumage.

6. Procédé selon l'une des revendications 1 à 5, **caractérisé en ce qu'**au début du fonctionnement de démarrage, l'air amenée (20') est préchauffé dans le premier échangeur de chaleur (6) d'environ 20 à 30°C à environ 700 à 800°C, où l'échange de chaleur indirect avec le mélange de gaz de combustion chaud (50") et d'air d'échappement (120') est exécuté en contre-courant.

7. Procédé selon l'une des revendications 1 à 6, **caractérisé en ce que** le pré-reformeur (3) est disposé à l'extérieur du bloc de piles (1') et au centre du deuxième échangeur de chaleur (7), et **en ce que** pendant l'état de fonctionnement fournisseur de courant, les gaz d'échappement (120") s'écoulant de l'enceinte de post-combustion (12) dans le deuxième échangeur de chaleur amènent au pré-reformeur (3) de la chaleur par un flux radial, dirigé vers l'intérieur.

8. Procédé selon la revendication 7, **caractérisé en ce que** le premier échangeur de chaleur (6) est disposé d'une manière concentrique autour du deuxième (7), et **en ce que** le gaz de combustion chaud (50") est formé ou introduit dans un espace annulaire (67) entre les deux échangeurs de chaleur.

9. Dispositif (1) avec des piles à combustible (10) pour la mise en oeuvre du procédé selon l'une des revendications 1 à 8, ledit dispositif comprenant un bloc de piles (1'), une enveloppe calorifuge (2), une enceinte de post-combustion (12) entre l'enveloppe et le bloc de piles, un pré-reformeur (3) pour le gaz de combustion (30'), un brûleur auxiliaire interne ou externe (5, 9) pour produire une source de chaleur auxiliaire pour la phase de démarrage ainsi qu'un premier et un deuxième échangeur de chaleur (6, 7) pour le préchauffage de l'air (20') respectivement pour le préchauffage du pré-reformeur, **caractérisé en ce que** le pré-reformeur est disposé à l'extérieur du bloc de piles et au centre du deuxième échangeur de chaleur (7), **en ce que** le premier échangeur de chaleur (6) est disposé d'une manière concentrique autour du deuxième, et **en ce qu'**une fente annulaire (70) disposée dans le deuxième échangeur de chaleur établit une liaison entre l'enceinte de post-combustion et le premier échangeur de chaleur

10. Dispositif selon la revendication 9, **caractérisé en ce qu'**un brûleur auxiliaire interne (5) est prévu qui comprend une face de combustion annulaire (52) et qui est disposé entre le premier et le deuxième échangeur de chaleur (6, 7).

11. Dispositif selon la revendication 9, **caractérisé en ce qu'**il est disposé entre le premier et le deuxième échangeur de chaleur (6, 7) une chambre annulaire (51, 67) dans laquelle peuvent être introduits les gaz de combustion chauds (50") qui ont été produits avec un brûleur auxiliaire externe (9).

12. Dispositif selon l'une des revendications 9 à 11, **caractérisé en ce que** le bloc de piles (1') est formé par un empilage cylindrique de piles à combustible (10), et **en ce que** l'enceinte de post-combustion (12) entoure l'empilage sous la forme d'une fente annulaire.

13. Dispositif selon les revendications 10 et 12, **caractérisé en ce que** l'enceinte de post-combustion (12) est suivie d'un système de canaux comprenant trois enceintes de fente annulaire concentriques (70, 76, 67), **en ce que** le brûleur auxiliaire (5) est disposé à l'emplacement de transition de l'enceinte de fente annulaire interne (70) à l'enceinte de fente annulaire médiane (76), et **en ce que** le brûleur auxiliaire avoisine la surface extérieure du dispositif (1).
